# EUROPÄISCHE PATENTSCHRIFT

(11) **EP 3 511 306 B1**
(45) Veröffentlichungstag und Bekanntmachung des Hinweises auf die Patenterteilung: **18.01.2023**
(21) Anmeldenummer: 18213472.6
(22) Anmeldetag: 18.12.2018
(51) Int. Cl.: C04B 28/02, C04B 28/04, C04B 38/06, C04B 111/28

(54) **THERMISCH STABILES UND ZYKLISCH BEANSPRUCHBARES ULTRAHOCHFESTES BETONBAUTEIL**
THERMALLY STABLE AND CYCLICALLY STRESSABLE ULTRA-HIGH STRENGTH CONCRETE COMPONENT
COMPOSANT EN BÉTON TRÈS HAUTE RÉSISTANCE, THERMIQUEMENT STABLE ET CYCLIQUEMENT RÉSISTANT AUX CONTRAINTES

(30) Priorität: 16.01.2018 DE 102018100850
(43) Veröffentlichungstag der Anmeldung: 17.07.2019
(73) Patentinhaber: Universität Kassel, 34125 Kassel (DE)
(72) Erfinder: Piotrowski, Siemon, 92318 Neumarkt in der Oberpfalz (DE); Wetzel, Alexander, 34302 Guxhagen (DE); Middendorf, Bernhard, 34379 Calden (DE); Feldmann, Maik, 34277 Fuldabrück (DE)
(74) Vertreter: Walther Bayer Faber Patentanwälte PartGmbB

(56) Entgegenhaltungen:
- EP-A1- 1 156 022
- EP-A1- 2 837 476
- EP-A2- 0 575 886
- WO-A1-2007/088271
- WO-A2-2010/142742
- CN-A- 107 382 205
- DE-U1- 29 623 766
- DE-U1-202004 004 523
- FR-A1- 2 463 756
- JP-A- H05 345 650
- HeidelbergCement: "Betontechnische Daten", , Retrieved from the Internet: URL:https://www.betontechnische-daten.de/d e/6-2-3-druckfestigkeitsklassen [retrieved on 2021-04-14]

## Beschreibung

Die vorliegende Erfindung betrifft ein thermisch stabiles und zyklisch beanspruchbares ultrahochfestes Betonbauteil.

Nachfolgend wird für ultrahochfesten Beton die Abkürzung UHPC verwendet. Bekannt für solche Betone ist auch die Abkürzung UHFB.

Aus der WO 2011/042294 A1 ist ein Verfahren zur Verbesserung der Dauerhaftigkeit von Festbetonen bekannt. Insbesondere geht es hier um die Dauerhaftigkeit von Betonen gegen das Eindringen von Wasser zur Vermeidung der sich daraus ergebenen Schädigungsmechanismen beispielsweise in Bezug auf die Frost-Tau-Beständigkeit und die Chlorid-Migration.

UHPC Betone sind aus dem Stand der Technik hinreichend bekannt. UHPC Betone unterscheiden sich von gängigen Betonen dadurch, dass diese eine höhere Festigkeit aufweisen. Im Einzelnen spricht man dann von einem UHPC, wenn dieser eine Festigkeit von mehr als 130 N/mm² aufweist, bei einem Wasserzementgehalt von < 0,25. UHPC Betone zeichnen sich durch eine dichte Mikrostruktur mit einer sehr geringen Kapillarporosität aus.

UHPC Betone sind allerdings in den seltensten Fällen durchhydriert. Bei Erwärmung eines solchen Betonbauteils aus einem UHPC Beton entsteht ein Wasserdampfpartialdruck aus freiem, ursprünglich physikalisch und chemisch gebundenen Wasser. Der Wasserdampfpartialdruck kann aufgrund der dichten Mikrostruktur des Betons nicht entweichen. Übersteigt der Wasserdampfpartialdruck die Zugfestigkeit der Matrix, versagt der Beton. Dabei kann es zu Abplatzungen von größeren Betonteilen kommen, oder aber auch zu explosionsartigen Erscheinungen mit gleichzeitiger starker Dampfentwicklung, bei denen kiesartige Reste verbleiben.

Um diesem Phänomen entgegenzuwirken, bestünde die Möglichkeit, die Gaspermeabilität der Betone zu erhöhen. Dies könnte beispielsweise dadurch erreicht werden, dass Polypropylenfasern der Feststoffmasse beigegeben werden, die sich bei Erwärmung in dem Bereich von 100° C bis 140° C ausdehnen und dann schmelzen, wodurch ein sogenanntes Porennetzwerk innerhalb des Betons entsteht. Durch dieses Porennetzwerk kann der Wasserdampfpartialdruck abgeleitet werden. Es hat sich allerdings herausgestellt, dass aufgrund des etwa 10-fach höheren Wärmeausdehnungskoeffizienten der Polypropylenfasern gegenüber dem Wärmeausdehnungskoeffizienten des Betons die Betonmatrix geschädigt wird. Das heißt, dass Polypropylenfasern in dichten Betonen und vor allem in Hochleistungsbetonen, bei einer Erhöhung der Temperatur zu einer Rissinduzierung und Mikrorissbildung in longitudinaler Richtung der Fasern führen. Diese Risse, die zusätzlich zu den durch die Polypropylenfasern geschaffenen Hohlräumen entstehen, sorgen schlussendlich für eine Entweichung des Wasserdampfpartialdrucks. Allerdings birgt die Kombination von Hohlräumen aufgrund des Schmelzens der Polypropylenfasern und der Rissbildung durch die Volumenvergrößerung der Polypropylenfasern vor deren Schmelzen die Gefahr, dass die Rissbildung nicht zielgerichtet erfolgt, sondern mehr oder weniger zufällig. Das heißt, dass die Rissbildung auch so vonstattengehen kann, dass bei Beanspruchung des Betonbauteiles durch die Rissbildung die Festigkeit erheblich herabgesetzt ist. Ein weiteres hohes Risiko für die Behinderung der Permeabilität des Bauteiles für Wasser besteht darin, dass aufgrund des Schmelzens der Polypropylenfasern die Risse verstopft werden. Das heißt, dass dann der auftretende Wasserdampfpartialdruck nicht abgeleitet werden kann. Ist dieser Druck höher als die Zugfestigkeit der Matrix, kann der Beton ebenfalls aufgrund des Einsatzes von PP-Fasern versagen.

In neuerer Zeit werden in Backöfen auch Betonplatten eingesetzt. Diese sind hohen thermischen Belastungen ausgesetzt, da diese Betonplatten in hohen Zyklen erhitzt und abgekühlt werden. Die Temperaturen, die ein Ofen erreicht, liegen bei bis zu 300°. Hierbei schmelzen die Polypropylenfasern, was zur Folge hat, dass beim Schmelzen der Polypropylenfasern aufgrund der Rissbildung entsprechende Gase austreten, was bei der Herstellung von Lebensmitteln in einem Ofen zu vermeiden ist.

Die CN 107 382 205 A offenbart einen ultrahochfesten Hochleistungsfaserbeton der Festigkeitsklasse C160 und ein Verfahren zu seiner Herstellung. Der Beton enthält die folgenden Bestandteile in Gewichtsteilen: 485 Teile Zement, 82 Teile Wasser, 1000 Teile Makadam Gestein, 750 Teile feiner Zuschlagstoff, 70 Teile Kohleasche, 73 Teile Reishüllenasche, 102 Teile Silikastaub, 14,0 Teile Wasserreduzierer, 9,5 Teile reaktiven Zusatzstoff, 1,6 Teile Zellulosefasern, 40 Teile hydroxymodifizierte Kohlenstoffnanoröhrchen-Dispersionsflüssigkeit, 37 Teile Graphenoxid-Dispersionsflüssigkeit und 2,6 Teile Entschäumer. Der Gewichtsanteil der Zellulosefasern beträgt somit 0,06%. Der hergestellte Beton hat eine höhere Zähigkeit, Dauerhaftigkeit, höhere Verbundfestigkeit mit Profilstahl, eine Druckfestigkeit von bis zu 167,74 MPa, eine Bruchfestigkeit von bis zu 35,21 MPa, eine Spaltfestigkeit von bis zu 14,59 MPa, eine Verbundfestigkeit mit Profilstahl von bis zu 7,54 MPa und einen Chlorideindringwiderstand der Klasse VI.

Die der Erfindung zugrundeliegende Aufgabe besteht darin, eine Feststoffmasse zur Herstellung eines UHPC Betons bereitzustellen, der thermisch hoch beanspruchbar ist, und darüber hinaus einer wechselnden Belastung unterzogen werden kann, also zyklisch beanspruchbar ist.

Zur Lösung der Aufgabe wird erfindungsgemäß vorgeschlagen, dass die Feststoffmasse mindestens ein hydraulisches Bindemittel, nämlich Zement und mindestens einen Zuschlagstoff, z. B. Quarzsand oder Basaltsand, sowie einen Anteil an Fasern aufweist, deren Volumen sich bei Erwärmung vermindert. Im Einzelnen ist in diesem Zusammenhang vorgesehen, dass die Feststoffmasse bei Erwärmung des fertigen Betons ihr Volumen reduzierende Fasern, nämlich Zellulosefasern und /oder Zelluloseregeneratfasern, aufweist. Durch die Volumenverminderung solcher Fasern bei Erwärmung entsteht eine Porenstruktur im Beton, die die Möglichkeit eröffnet, den im Beton entstehenden Wasserdampfpartialdruck abzuleiten, ohne dass es zu einer Mikrorissstruktur kommt, die zu einer Zerstörung eines aus der erfindungsgemäßen Feststoffmasse hergestellten Betonbauteils führt.

Nun ist aus dem Stand der Technik gemäß der US 2012/0328821 A1 durchaus bekannt, solche Zelluloseregeneratfasern bei Betonen zu verwenden. Nicht bekannt ist allerdings die Verwendung solcher Zellulosefasern bzw. auch Zelluloseregeneratfasern in Verbindung mit UHPC Betonen. Schlussendlich ist man davon ausgegangen, dass der Einsatz solcher Zellulosefasern bzw. Zelluloseregeneratfasern deshalb für UHPC Betone nicht in Frage kommt, da diese stark hygroskopisch sind. Dies vor dem Hintergrund, dass dann der Wasserstoffpartialdruck im Beton noch höher würde, als er auch ohne diese Fasern in der Matrix bereits ist. Es hat sich allerdings herausgestellt, dass dem nicht so ist, sondern dass vielmehr das zusätzliche Wasser zum einen entweicht, zum anderen allerdings auch zu einer weiteren Hydratisierung des Betons führt, was daran liegt, dass UHPC Betone nicht durchhydratisiert sind. Das heißt, bei weiterer Hydratisierung führt das freiwerdende Wasser zu einer Erhöhung der Festigkeit des Betons. Übliche Betone hingegen, sind durchhydratisiert, was zur Folge hat, dass hier eine Erhöhung der Festigkeit, auch bei freiwerdendem Wasser in der Mikrostruktur, nicht stattfindet.

Zusammenfassend ist demzufolge festzuhalten, dass durch die Verwendung der von Zellulosefasern und von Zelluloseregeneratfasern die bereits guten Dauerhaftigkeits- und mechanischen Eigenschaften des UHPC Beton weiterhin erhöht werden können. Dies insbesondere auch deshalb, weil eine Zelluloseregeneratfaser eine im Vergleich zu Polypropylenfasern höhere Zugfestigkeit vom 918,1 MPa gegenüber 247,2 MPa und einen höheren E-Modul 6.753,8 MPa gegenüber 1158,6 MPa aufweist. Da die Wasseraufnahme derartiger Zellulose oder Zelluloseregeneratfasern bis zu 10 % beträgt, ist auch mit einer erheblichen Steigerung der Festigkeit des Betons bei Erwärmung eines solchen Betons zu rechnen.

Erfindungsgemäß ist vorgesehen, dass der Anteil an bei Erwärmung ihr Volumen vermindernden Fasern in Bezug auf den volumetrischen Festkörperanteil des Betons zwischen 0,3 und 1,2 Vol.-%, besonders vorteilhaft zwischen 0,3 und 0,6 Vol.-%, insbesondere 0,6 Vol.-% beträgt. Die Fasern weisen vorteilhaft eine Länge von ca. 0,5 bis 20 mm und einen Durchmesser von ca. 5 bis 200 µm, vorzugsweise ca. 12 µm auf.

Vorteilhafte Merkmale und Ausgestaltungen der Erfindung sind den Unteransprüchen bzw. den nebengeordneten Ansprüchen zu entnehmen.

Im Einzelnen ist bei einem UHPC Betonbauteil vorteilhaft weiterhin vorgesehen, dass das Bauteil eine Gefügestruktur aufweist, bei der die durch die Fasern erzeugten Hohlräume zumindest partiell mit der Umgebung in Verbindung stehen, um das Entweichen des Wasserstoffpartialdruckes, das heißt des Wassers, das nicht zur weiteren Hydratisierung des Betons verwendet wird, zu ermöglichen. Die weitere Hydratisierung oder die puzzolanische Reaktion durch den Wasserdampf führt grundsätzlich zu einer Erhöhung der Festigkeit bei bestimmten Temperaturbereichen.

Gegenstand der Erfindung ist auch die Verwendung eines zuvor beschriebenen thermisch stabilen und zyklisch beanspruchbaren, ultrahochfesten Betonbauteils, als Brandschutzelement, als Ofenplatte als Natursteinersatz, zum Bespiel für Speckstein, bzw. auch zur Herstellung von Industrieböden mit hoher mechanischer und gleichzeitig zyklischer, thermischer Belastung.

Nachstehend findet sich ein Beispiel für eine Feststoffmasse zur Herstellung eines UHPC-Betonbauteils.

| **Ausgangsstoff** | **Volumen [dm³]** | **Masse [kg]** | **Dichte [kg/dm³]** |
|---|---|---|---|
| **Wasser** | 184,20 | 184,198 | 1,00 |
| **Porenraum** | 15,00 | - | 0,00 |

| **Bindemittel** | | | |
|---|---|---|---|
| CEM I 52,5 R HS-NA (Holcim Sulfo) | 251,42 | 779,389 | 3,10 |
| Sika Silikoll P unkompaktiert | 75,10 | 165,216 | 2,20 |

| **Zusatzmittel** | | | |
|---|---|---|---|
| Sika Viskocrete 2810 | 22,07 | 23,615 | 1,07 |
| 0 | 0,00 | 0,000 | 0,00 |

| **Zuschlag / Zusatzstoffe** | | | |
|---|---|---|---|
| Quarzmehl Millisil W12 | 73,34 | 194,353 | 2,65 |
| | 0,00 | 0,000 | 2,65 |
| Quarzsand G32 0,125 mm / 0,5 mm | 355,98 | 943,339 | 2,65 |
| | 0,00 | 0,000 | 3,00 |
| | 0,00 | 0,000 | 3,00 |
| | 0,00 | 0,000 | 3,00 |
| | 0,00 | 0,000 | 2,65 |

| **Fasern** | | | |
|---|---|---|---|
| Mikrodrahtfasern 0,20 mm / 13 mm (Stratec) | 16,9000 | 132,665 | 7,85 |
| CR-Fasern | 6,00 | 9,000 | 1,50 |
| | 0,00 | 0,000 | 0,00 |
| **Summe:** | **1000,000** | 2422,775 | |

Mit einer solchen Feststoffmasse können Betonbauteile hergestellt werden, die nach 28 Tagen der Normlagerung eine Festigkeit von ca. 165 N/mm² aufweisen. Ein solches Betonbauteil ist auch thermisch hochbelastbar, da es nahezu beliebig oft auf über 250 °C und zwar insbesondere bis auf ca. 500 °C erwärmt und auf Raumtemperatur abgekühlt werden kann, ohne dass es zu einer Beeinträchtigung der primären Funktion des Betonbauteils oder Betons kommt.

## Patentansprüche

1. Thermisch stabiles und zyklisch beanspruchbares ultrahochfestes Betonbauteil aufweisend eine Festigkeit von mehr als 130 N/mm² bei einem Wasserzementgehalt von weniger als 0,25, hergestellt mit einer Feststoffmasse mit mindestens einem hydraulischen Bindemittel, nämlich Zement, und mindestens einem Zuschlagsstoff, z. B. Quarzsand oder Basaltsand, sowie einem Anteil an Fasern, nämlich Zellulosefasern und/oder Zelluloseregeneratfasern, deren Volumen sich bei der Erwärmung vermindert,
**dadurch gekennzeichnet,**
**dass** der Anteil der bei Erwärmung ihr volumenvermindernden Fasern in Bezug auf den volumetrischen Festkörperanteil des Betons zwischen 0,3 und 1,2 Vol.-%, besonders vorteilhaft zwischen 0,3 und 0,6 Vol.-% und insbesondere 0,6 Vol.-% beträgt.

2. Betonbauteil nach einem der voranstehenden Ansprüche,
**dadurch gekennzeichnet,**
**dass** die Fasern eine durchschnittliche Länge von 0,5 bis 20 mm, und/oder einen Durchmesser von 5 bis 200 µm aufweisen.

3. Betonbauteil nach einem der voranstehenden Ansprüche,
**dadurch gekennzeichnet,**
**dass** das Bauteil eine Gefügestruktur aufweist, bei der die durch die Fasern erzeugten Hohlräume zumindest partiell mit der Umgebung in Verbindung stehen.

4. Verwendung eines thermisch und zyklisch beanspruchbaren ultrahochfesten Betonbauteils nach einem der voranstehenden Ansprüche,
als Brandschutzelement, Ofenplatte, Betonrohr, Industrieboden oder Feuerbetonersatz.

## Claims

1. A thermally stable and cyclically stressable ultra-high strength concrete component having a strength of more than 130 N/mm² at a water cement content of less than 0.25, manufactured using a solid compound having at least one hydraulic binding agent, namely cement, and at least one aggregate, e.g. quartz sand or basalt sand, and a portion of fibers, namely cellulose fibers and/or regenerated cellulose fibers, whose volume reduces on heating,
**characterized in that**
the portion of the fibers whose volume reduces on heating amounts to between 0.3 and 1.2 vol%, particularly advantageously between 0.3 and 0.6 vol%, and in particular 0.6 vol%, with respect to the volumetric solid portion of the concrete.

2. A concrete component in accordance with one of the preceding claims,
**characterized in that**
the fibers have an average length of 0.5 to 20 mm and/or a diameter of 5 to 200 µm.

3. A concrete component in accordance with one of the preceding claims,
**characterized in that**
the component has a microstructure in which the cavities generated by the fibers are at least partially connected to the environment.

4. Use of a thermally and cyclically stressable ultra-high strength concrete component in accordance with one of the preceding claims as a fire protection element, hot plate, concrete pipe, industrial floor, or refractory concrete replacement.

## Revendications

1. Composant en béton très haute résistance, thermiquement stable et résistant aux contraintes cycliques, présentant une résistance supérieure à 130 N/mm² pour un rapport eau/ciment inférieur à 0,25, fabriqué à l'aide d'une masse solide avec au moins un liant hydraulique, à savoir du ciment, et au moins un agrégat, par exemple du sable de quartz ou du sable de basalte, ainsi qu'une part de fibres, à savoir des fibres de cellulose et/ou des fibres de cellulose régénérée, dont le volume diminue lors de l'échauffement, **caractérisé en ce que**
la part des fibres diminuant de volume lors de l'échauffement par rapport à la part volumétrique en solides du béton est comprise entre 0,3 et 1,2 %vol, de manière particulièrement préférée entre 0,3 et 0,6 %vol et est en particulier de 0,6 %vol.

2. Composant en béton selon l'une des revendications précédentes, **caractérisé en ce que**
les fibres présentent une longueur moyenne de 0,5 à 20 mm et/ou un diamètre de 5 à 200 µm.

3. Composant en béton selon l'une des revendications précédentes, **caractérisé en ce que**
le composant présente une structure, selon laquelle les cavités générées par les fibres sont au moins partiellement reliées à l'environnement.

4. Utilisation d'un composant en béton très haute résistance, résistant aux contraintes thermiques et cycliques selon l'une des revendications précédentes,
comme élément de protection contre l'incendie, plaque de poêle, tuyau en béton, sol industriel ou produit de remplacement de béton réfractaire.
